# EUROPÄISCHE PATENTSCHRIFT

(11) **EP 2 019 000 B1**
(45) Veröffentlichungstag und Bekanntmachung des Hinweises auf die Patenterteilung: **20.04.2011**
(21) Anmeldenummer: 08160506.5
(22) Anmeldetag: 16.07.2008
(51) Int. Cl.: B60R 21/215

(54) **Gewirke mit Einlegefäden für Airbagklappe**
Knitted fabrics with filler threads for airbag flap
Tissu à mailles doté de fils d'embobinage pour clapet d'airbag

(30) Priorität: 26.07.2007 DE 102007035073
(43) Veröffentlichungstag der Anmeldung: 28.01.2009
(73) Patentinhaber: Lisa Dräxlmaier GmbH, 84137 Vilsbiburg (DE)
(72) Erfinder: Dorn, Felix, 84036, Landshut (DE)
(74) Vertreter: HOFFMANN EITLE

(56) Entgegenhaltungen:
- EP-A- 1 145 923
- DE-A1- 19 530 346
- DE-A1- 19 935 625
- US-A- 5 639 115
- US-A1- 2004 164 531
- US-A1- 2005 269 804

## Beschreibung

### Gebiet der Erfindung

Die Erfindung betrifft Airbagklappen-Scharniere, insbesondere Airbagklappen-Scharniere mit von Kunststoff umspritzten Textileinlagen, sowie Verfahren zu deren Herstellung.

### Stand der Technik

Eine Einrichtung nach dem Oberbegriff des Anspruchs 1 ist aus der US 5,639,115 bekannt.

Airbags werden insbesondere in Kraftfahrzeugen in einer Vielzahl zum Schutz von Fahrzeuginsassen gegenüber Aufprallschäden von verschiedenen Seiten eingesetzt. So ist es derzeit üblich, nicht nur im Lenkrad sowie der Instrumententafel vor dem Beifahrersitz derartige Airbags vorzusehen, sondern ebenso in den Türverkleidungen, gegebenenfalls im Dachhimmel, an den Seiten von Sitzen oder dergleichen. Gestiegene Anforderungen an das Erscheinungsbild derartiger Innenverkleidungsteile erfordern, dass der Airbag und insbesondere das gesamte Airbagmodul, bestehend aus dem zusammengefalteten Airbag, dem Schussmodul, gegebenenfalls einem Schusskanal und den erforderlichen Stützstrukturen, unsichtbar innerhalb der Verkleidungsteile und unterhalb zumindest der obersten Dekorschicht angeordnet sind.

Gerade dort, wo der Airbag großvolumig ist und dementsprechend auch einen vergleichsweise großen Bauraum beansprucht sowie dort, wo sich der Airbag im Auslösefall über einen großen Bereich erstrecken soll, beispielsweise im Bereich vor dem Beifahrersitz innerhalb der Fortsetzung der Instrumententafel, hat es sich durchgesetzt, oberhalb des Airbags innerhalb des Dekors so genannte Airbagklappen einzusetzen. Diese erfüllen mehrere Aufgaben, von denen beispielhaft die Abstützung des Dekormaterials oberhalb des zusammengefalteten Airbags und der Schutz des zusammengefalteten Airbags vor mechanischen Beschädigungen zu nennen sind.

Diese Airbagklappen können darüber hinaus im Auslösefall für den Airbag die Verdrängung der Dekormaterialien des Innenverkleidungsteils positiv unterstützen, um so eine möglichst freie Entfaltung des Airbags in der gewünschten Richtung zu unterstützen. Im Auslösefall reißt das Dekormaterial vorzugsweise entlang vorgegebener Aufreißlinien und die Airbagklappe klappt vorzugsweise in einem vorab definierten Umfang um eine festgelegte Klappachse und gibt den Weg für den sich entfaltenden Airbag frei.

Es wurde hierbei schon früh erkannt, dass ein besonderes Augenmerk bei der Verwendung derartiger Klappen darauf gelegt werden muss, dass die Klappen weder den Fahrzeuginsassen verletzen noch größere Schäden im Fahrzeuginneren bewirken. So sollte beispielsweise bei Airbagklappen im Türbrüstungsbereich oder in der Instrumententafel sichergestellt sein, dass die Airbagklappe nicht so weit aus der Ruhelage umklappt, dass sie auf die Frontscheibe oder Seitenscheibe des Fahrzeugs aufschlägt und diese gegebenenfalls beschädigt. Ebenso muss gewährleistet sein, dass die Airbagklappen sich im Auslösefall des Airbags nicht vollständig von der Umgebung lösen und gegebenenfalls frei durch die Fahrgastzelle fliegen.

Im Bereich der Instrumententafeln und Türverkleidungen werden daher vorwiegend Blechscharniere eingesetzt, die zwischen einer scharnierseitigen Kante der Airbagklappe und dem Umgebungsbereich angeordnet sind. Diese Umgebungsbereiche können beispielsweise aus einer speziellen Rahmenstruktur aus Kunststoff oder Metall bestehen. Üblicherweise werden die Blechscharniere in der Endmontage beispielsweise der Instrumententafel durch an sich bekannte Fügeverfahren, wie z. B. Heißnieten, Ultraschall-Schweißen oder unter Verwendung von Hohl- und Popnieten sowie durch Schraubverbindungen mit dem Träger gefügt.

Derartige Blechscharniere sind jedoch vergleichsweise aufwändig herzustellen, benötigen aufwändige und mehrschrittige Arbeitsprozesse zur Herstellung und Verbindung und brechen überdies bei Materialüberbeanspruchungen üblicherweise scharfkantig, was das Verletzungsrisiko für einen Fahrzeuginsassen im Falle eines Bauteilversagens nochmals deutlich erhöht. Darüber hinaus sind derartige Scharniere vergleichsweise massereich, wodurch beim Aufklappen der Airbagklappe Energie verbraucht wird, was entweder zu einer verzögerten Entfaltung des Airbags oder zur Notwendigkeit einer größeren Bemessung der Treibladung im Schussmodul führt. Beide Alternativen sind jedoch nicht wünschenswert.

Um eine über den Einbauort hinweg durchweg gleich bleibende Haptik und Optik zu schaffen, werden derartige Airbagsysteme mit der Airbagklappe und dem die Klappe gegebenenfalls umgebenden Rahmen integral im Dekorträger ausgestaltet. Ein Beispiel hierfür ist der DE 4 437 773 C1 zu entnehmen.

Aufgrund der Nachteile von Blechscharnieren wurden auch Ansätze verfolgt, mit Kunststoff umspritzte Gewebe-Einlagen als Scharniere zu verwenden. Durch die Umspritzung mit Kunststoff kann ein inniger und formschlüssiger Verbund mit dem Kunststoff der Airbagklappe sowie dem Kunststoff der Umgebungsbereiche erzielt werden. Derartige Gewebe-Einlagen sind beispielsweise aus der DE 199 35 625 A1 der DE 10 2004 014 423 A1 sowie der EP 1 062 128 B1 bekannt.

Derartige Gewebe, die in einer dem Fachmann bekannten Weise aus miteinander verwebten Kett- und Schussfäden bestehen, die im Wesentlichen senkrecht zueinander angeordnet sind, werden üblicherweise so angeordnet, dass entweder die Kett- oder die Schussfäden senkrecht zur scharnierseitigen Kante der Airbagklappe angeordnet sind. Diese Gewebeeinlagen wirken aufgrund der Tatsache, dass die auf das Gewebe beim Umklappen der Airbagklappe einwirkenden Kräfte ebenfalls im Wesentlichen senkrecht zur scharnierseitigen Kante auftreten, im Wesentlichen nur auf eine Art der Gewebefäden ein.

Derartige Gewebe sind beispielsweise in der DE 20206379 U1 und der DE 199 35 625 A1 als so genannte "Gewebenetze" beschrieben, bei denen meist eine dem Fachmann bekannte Leinwand- oder Dreherbindung vorliegt. Diese Netze, bei denen keine Knotenverbindung zwischen den Kett- uns Schussfäden vorliegt, erlauben ein vergleichsweise leichtes Herausziehen einzelner Fäden aus dem Gewebe, was im Einsatz als Scharnier das Risiko für ein Bauteilversagen erfüllt. Daher wurde auch ein Gewebe verwendet, bei dem durch Dreherbindungen und Schlichteauftrag eine geringfügig bessere Verbindung zwischen Kett- und Schussfäden als bei einer unbeschichteten Leinwandbindung vorliegt.

Ein Ausreißen der Fäden im Randbereich oder ein Herausziehen einzelner Fäden aus dem Kunststoff ist dennoch mit vergleichsweise geringen Kräften unterhalb 1 kN möglich.

Darüber hinaus erfolgt die Kraftübertragung zwischen den Kunststoffteilen und dem konventionellen Netzscharnier direkt, einstufig und ohne weiter Dämpfungseigenschaften. Dies bedeutet, dass im günstigsten Fall, bei dem kein Einreißen des Scharniers beim Umklappen der Airbagklappe erfolgt, das Scharnier die hierbei auftretenden Kräfte bis zu seiner Dehngrenze aufnimmt und oberhalb seiner Dehngrenze die einwirkenden Kräfte vollständig und ungedämpft in den Kunststoff der Airbagklappe und der Umgebungsbereiche ableitet.

In der bereits oben genannten DE 202 06 379 U1 wird daher ein im 45°-Winkel eingelegtes Verstärkungsgewebe beschrieben. Bei Praxistests hat sich herausgestellt, dass bei Verwendung eines derartigen Verstärkungsgewebes nur diejenigen Fäden eine Wirkung erzielen, die in einem Abstand von wenigstens 20 mm beidseitig über den Abschnitt des Scharnierbereichs hinausragen. Dieses Hinausragen ist erforderlich, da sonst keine ausreichende Verankerung und somit Kraftübertragung des Netzes auf den Kunststoff der Airbagklappe und der Umgebungsbereiche möglich ist. Eine Dämpfung der Energie wird hierbei durch eine Dehnung des Netzes und ein Abgleiten der Fäden im Kunststoff bewirkt und limitiert so die Kraftübertragung des Scharniers in Abhängigkeit von den Adhäsionskräften zwischen den Fäden des Netzes und dem das Netz umgebenden Kunststoff. Dies hat jedoch einen direkten Einfluss auf die Sicherheit der Klappenfunktion und somit auf die Sicherheit der Passagiere.

Wenn im Auslösefall des Airbags beim Umklappen der Airbagklappe die zulässige Höchstzugkraft auf das Scharnier und somit dessen Fäden überschritten wird, beginnen die Fäden im Kunststoff abzugleiten, wobei üblicherweise eine nur sehr geringe Rückhaltewirkung der Fäden im Kunststoff zu beobachten ist. Durch dieses Herausziehen der Fäden verlängert sich wiederum das Scharnier auch über ein gewünschtes Maß hinaus, wodurch schließlich die Airbagklappe beispielsweise in einer Instrumententafel bedrohlich nah an die Windschutzscheibe gelangt. Ebenso besteht die Gefahr, dass die Fäden vollständig herausgezogen werden, was schlussendlich zu einer Loslösung der Airbagklappe führt.

Im Falle von besonders dicken Dekoren mit beispielsweise einer zwischen dem Dekorträger und dem Dekormaterial angeordneten Schaum- oder Abstandsgewirk-Schicht sollte ein derartiges Textilscharnier als lange Schlaufe gelegt werden, um ein Aufklappen des Airbagdeckels zu gewährleisten, da andernfalls die Kräfte auf das Scharnier zu groß bzw. die Öffnung für den Airbag zu klein wäre, wenn andernfalls bei der Aufklappung der Airbagklappe auch das Dekor selbst verformt werden müsste. Durch dieses Legen einer Schlaufe wird der Deckel nach dem Aufreißen des Dekor oberhalb der Airbagklappe zuerst in eine translatorische Bewegung beschleunigt, bis die vorab gelegte Schlaufe gespannt ist. Erst in einem weiteren Schritt wird der Deckel durch das nun gespannte Scharnier und die Lager der Anbindung des Scharniers im Deckel in eine rotatorische Bewegung gezwungen. In diesem sehr kuren Umlenkpunkt entstehen jedoch in besonders kurzer Zeit von etwa 0,3 ms hohe Kräfte, die über die Fäden direkt auf den Kunststoff übertragen werden müssen.

Hierbei ist auch zu berücksichtigen, dass die verwendeten Materialien gerade in der Fahrgastzelle eines Kraftfahrzeugs auch aufgrund starker Sonneneinstrahlung besonders hohen Temperaturwechseln unterliegen. Spezifikationen für Temperaturwechseltests, die von Automobilherstellern durchgeführt werden, sehen Temperaturen im Bereich von -35°C bis +85°C vor.

Selbstverständlich aber weist der Kunststoff für den Dekorträger und insbesondere das Dekormaterial nicht über den gesamten Temperaturbereich gleiche Materialeigenschaften auf. Vielmehr ist der Kunststoff bei -35°C vergleichsweise spröde und bei +85°C vergleichsweise weich. Bei sprödem Kunststoff neigen die Fäden zum Herausreißen aus dem Kunststoffverbund, bei weichem Kunststoff erfolgt die Loslösung dagegen eher über ein Herausziehen oder Abschälen der Fäden aus dem Kunststoffträger.

### Aufgabe der Erfindung

Es war daher eine Aufgabe der Erfindung, ein Scharnier für eine Airbagklappe zur Verfügung zu stellen, welches eine hohe Sicherheit gegenüber Materialversagen aufweist und überdies eine Dämpfung im Scharniermechanismus zur Verfügung stellt. Im Falle einer Schlaufenbildung soll ein weicher Übergang der translatorischen zur rotatorischen Bewegung ermöglicht werden.

Diese Aufgabe der Erfindung wird durch ein Scharnier mit den Merkmalen des Anspruchs 1 gelöst. Vorteilhafte Ausgestaltungen der Erfindung sind in den jeweils abhängigen Ansprüchen definiert.

### Zusammenfassung der Erfindung

Die erfindungsgemäße Lösung sieht die Verwendung von Gewirken oder Gestricken mit Einlege- oder Stehfäden vor, die unter einem Winkel von wenigstens 15° in Bezug auf die Längserstreckung der scharnierseitigen Kante der Airbagklappe angeordnet sind. Durch das Gewirke oder Gestrick lässt sich eine sichere formschlüssige Verbindung mit dem Kunststoff herstellen, die bei einem herkömmlichen Leinwand-Gewebe nicht erreicht werden kann. Ein Gewirke oder ein Gestrick hat durch seine textile Schlaufenbindung vorzugsweise in alle vier Richtungen eine Verbindung mit den benachbarten Fäden, die selbst Lasten in 45°-Richtung zur Warenrichtung zulassen.

Ein Gewirke besitzt sich in einem Winkel von etwa 45° kreuzende Fäden, die im Kreuzpunkt miteinander verbunden sind. Ebenso besteht ein Gestrick aus mindestens einem Endlosfaden, wobei sich diese an den Kreuzungspunkten teilweise umschlingen. Bei Umspritzung des Gewirkes oder Gestricks mit Kunststoff kann der Kunststoff nicht allein auf den beiden Oberflächen der Textilie vorliegen, sondern die Maschen des Gewirkes oder Gestricks können zudem um "Kunststoffstege" zwischen den beiden Kunststofflagen auf der Ober- und Unterseite der Textilie verlaufen. Die mit Kunststoff gefüllten Zwischenräume des Gewirkes oder Gestricks sorgen somit für eine formschlüssige Verbindung, was gegenüber Geweben, bei denen lediglich die Adhäsionskräfte zwischen Faden und Kunststoff wirken, einen zusätzlichen Verbindungseffekt zwischen Textilie und Kunststoff erlaubt.

Durch die Stäbchen- oder Maschenbindung verkrallt sich das Gewirke oder Gestrick formschlüssig im Kunststoff und kann bis zur Reißkraft des Gewirkes oder Gestricks oder des Kunststoffs belastet werden.

Durch den diagonalen Fadenverlauf wird zudem eine weit höhere Dehnung des Scharniers erreicht, womit sich die Länge der Schlaufe reduzieren lässt und dann, wenn wie eingangs beschrieben eine Schlaufe vorgesehen ist, ein weicherer Übergang von einer translatorischen Bewegung in eine rotatorische Bewegung ermöglicht wird.

Auch die Dehnung ist bei Gewirken oder Gestricken aufgrund der Bindungsart deutlich größer, was zu einem sanfteren Übergang von der Translation in die Rotation führt und somit die Kräfte auf das Gewirke oder Gestrick und dessen Verankerung reduziert.

Mit dem erfindungsgemäßen Bereitstellen von Einlege- oder Stehfäden im Gestrick oder Gewirke kann darüber hinaus die Dehnfähigkeit des Scharniers gezielt gesteuert werden. In Kombination mit dem Gewirke oder Gestrick kann ein zweistufig wirkendes Scharnier hergestellt werden, das eine optimale Kinetik des Airbagdeckels ermöglicht und dabei sicher im Kunststoff eingebetet ist.

Die zweistufige Wirkung wird dadurch erreicht, dass bei der erfindungsgemäßen Anordnung der Einlege- oder Stehfäden unter einem Winkel von wenigstens 15° in Bezug auf die Längserstreckung der scharnierseitigen Kante der Airbagklappe die Einlege- oder Stehfäden zuerst gespannt werden und sich bei steigender Krafteinleitung aus dem Kunststoff und/oder dem Gewirke oder Gestrick herausziehen, ohne dass das Gewirke oder Gestrick im Schlaufenbereich sofort vollständig gedehnt wird. Mit steigendem Nachgeben des Einlege- oder Stehfadens dehnt sich aber das Gewirke oder Gestrick und nimmt immer mehr Energie auf, was den Einlegefaden im Kunststoff abbremst.

Die formschlüssige Verbindung der Fäden des Gewirkes oder Gestricks an den Kreuzungspunkten ermöglicht überdies eine Orientierung des Gewirkes in alle Richtungen, ohne dass hierdurch die Festigkeit des Gewirkes oder Gestricks bzw. des hierdurch hergestellten Scharniers negativ beeinflusst würde. Es verändern sich lediglich die Dehnungseigenschaften durch die Ausrichtung des Gewirkes oder Gestricks mit den darin angeordneten Einlegefäden.

Gemäß einem ersten Aspekt der Erfindung wird somit ein Scharnier für eine Airbagklappe zur Verfügung gestellt, das die erfindungsgemäße Aufgabe mit besonders einfachen Mitteln und kostengünstig löst. Zudem ist kein nennenswerter Einfluss auf das Baugewicht zu verzeichnen und die Erfindung stellt eine Möglichkeit für den Fachmann zur Verfügung, die Eigenschaften des Scharniers durch Variation von Fadenmaterial, Fadenstärke, Fadenspannung, Maschenweite, Veränderung der Art des Gestricks oder Gewirkes, Variation der Anzahl und/oder Ausrichtung der Einlege- oder Stehfäden, unterschiedliche Winkelgeometrien der Maschenstruktur und dergleichen über einen besonders großen Bereich variabel einzustellen.

In einer bevorzugten Ausführungsform der Erfindung sind sämtliche Einlegefäden im Wesentlichen parallel zueinander angeordnet. Überdies wird durch eine bevorzugte gleiche Beabstandung der Einlege- oder Stehfäden innerhalb des Gewirkes oder Gestricks gewährleistet, dass gleiche Materialeigenschaften über die gesamte Breite des erfindungsgemäßen Scharniers bereitgestellt werden.

In einer weiteren bevorzugten Ausgestaltungsform der Erfindung ist zumindest eine Mehrzahl der Einlegefäden im Wesentlichen senkrecht zur Längserstreckung der scharnierseitigen Kante der Airbagklappe angeordnet. Insbesondere dann, wenn sämtliche Einlege- oder Stehfäden zueinander parallel angeordnet sind, wird in einer besonders bevorzugten Weise die Anordnung aller Einlege- oder Stehfäden senkrecht zur Längserstreckung der scharnierseitigen Kante der Airbagklappe erfolgen. Hierdurch wird sichergestellt, dass der oben bereits beschriebene weiche Übergang von translatorischem zu rotatorischem Bewegungsmuster dadurch eingestellt wird, dass die von dem Scharnier aufzunehmenden Kräfte zuerst nahezu vollständig von den Einlege- oder Stehfäden und erst im Anschluss von dem Gewirke oder Gestrick aufgenommen werden.

Dabei wird besonders bevorzugt, dass der Widerstand der Einlege- oder Stehfäden gegenüber einem zumindest teilweisen Herausziehen aus dem Gewirke oder Gestrick größer als die zur Einbringung einer wesentlichen Längsdehnung in die Einlegefäden erforderliche Kraft ist. Hierdurch wird gewährleistet, dass die Einlege- oder Stehfäden sich vor dem Herausziehen aus dem Gewirke oder Gestrick zumindest teilweise dehnen und somit zu einer ersten Dämpfung beitragen, ohne den Verbund aus Gewirke oder Gestrick einerseits und Einlege- oder Stehfäden andererseits bereits in diesem Schritt zu schwächen. Erst nach Einbringung zumindest einer Teildehnung in die Einlege- oder Stehfäden wird dann eine weitere Dämpfung durch das Scharnier dadurch bewirkt, dass sich die Einlege- oder Stehfäden aus dem Gewirke oder Gestrick und/oder dem Kunststoff herausziehen und infolgedessen die Krafteintragung in immer größerem Maß vom Gewirke oder Gestrick selbst getragen wird.

Es wird überdies bevorzugt, dass die Einlege- oder Stehfäden eine Beschichtung mit einem Trennmittel oder Kraftvermittler aufweisen, über die die Einstellung der Anhaftfähigkeit am umspritzten Kunststoff eingestellt werden kann. Der Fachmann wird beispielsweise unter Durchführung einfacher Vergleichsversuche und unter Verwendung ihm bekannter Mittel abhängig von dem Material und/oder der Oberfläche der Einlege- oder Stehfäden und/oder dem verwendetem Kunststoffmaterial eine optimale Anhaftfähigkeit einstellen können, durch die zum einen ein sicherer formschlüssiger Verbund des gesamten Systems aus Gewirke oder Gestrick mit Einlege- oder Stehfäden und dem Kunststoff und auf der anderen Seite ein geeignetes Herausziehen der Einlege- oder Stehfäden aus dem Gewirke oder Gestrick und/oder dem Kunststoff zum gewünschten Zeitpunkt, d.h. bei einer vorab festgelegten Höhe der auf die Einlege- oder Stehfäden einwirkenden Kraft, einstellbar ist.

Es hat sich herausgestellt, dass es besonders vorteilhaft ist, dass der Einlege- oder Stehfäden eine Feinheit von wenigstens 500 dtex, vorzugsweise von etwa 2000 dtex besitzt.

In Bezug auf das im erfindungsgemäßen Sinne verwendete Gestrick oder Gewirke wird besonders bevorzugt, dass diese aus Schlaufen bestehende Maschenware mit sich unter einem Winkel von etwa 45° kreuzenden Fäden aufweist, die sich an den jeweiligen Kreuzpunkten einander teilweise umschlingen. Hierdurch wird die Dehnfähigkeit des Gewirkes oder Gestricks sowohl in Längsrichtung als auch in Querrichtung nahezu gleichmäßig einstellbar. Unterschiedliche Dehnungseigenschaften in Längs- bzw. Querrichtung des Gewirkes oder Gestricks werden somit nahezu vollständig über die Ausrichtung der Einlegefäden im Gewirke oder Gestrick einstellbar.

In einer besonders bevorzugten Ausführungsform wird innerhalb der Maschenstruktur ein weiterer Einlege- oder Stehfaden geführt, über den eine weitere Dämpfung erreicht werden kann. In ganz besonders bevorzugter Weise wird zuerst der eingangs beschriebene Einlege- oder Stehfaden beansprucht und in einem weiteren Schritt wird vorzugsweise bevor die Kraft in die Maschen-Struktur des Gewirks oder Gestrickes eingeleitet wird, der weitere integrierte Einlege- oder Stehfäden beansprucht. Hierdurch wird mit einfachen Mitteln eine dreifach wirkende Dämpfung durch das Scharnier verwirklicht.

Bevorzugt wird eine Ausgestaltung des Gewirkes oder Gestricks mit Zwischenräumen zwischen den einzelnen Fäden, die einen mittleren Durchmesser von mindestens 2,5 mm, vorzugsweise mindest 3,5 mm aufweisen. Im erfindungsgemäßen Sinne wird dieser Durchmesser ohne Berücksichtigung der Einlegefäden allein unter Messung der von den Gewirke- oder Gestrickfäden erzeugten Maschenstruktur bestimmt.

Im Falle des Umspritzens des Gewirkes oder Gestricks mit Kunststoff auf beiden Oberflächen des Gewirkes oder Gestricks kann somit sichergestellt werden, dass bei üblichen Viskositäten derartiger Kunststoffe im Schmelzzustand die Zwischenräume des Gewirkes oder Gestricks unter Ausbildung von Kunststoffstegen zwischen den auf den Oberflächen des Gewirkes oder Gestricks aufliegenden Kunststofflagen nahezu vollständig ausgefüllt sind. Hierdurch wird ein besonders inniger Verbund aus Gewirke oder Gestrick mit dem Kunststoff erzielt. Eine Loslösung der Airbagklappe kann dementsprechend sicher verhindert werden.

Als besonders vorteilhaft hat sich ein Gewirke oder Gestrick herausgestellt, bei dem die einzelnen Fäden einen mittleren Durchmesser von mehr als 1,0 mm, vorzugsweise etwa 1,5 mm aufweisen. Ganz besonders bevorzugt wird ein Gewirke- oder Gestrickfaden mit einer Feinheit von etwa 100 dtex bis etwa 1000 dtex, beispielsweise bestehend aus Zwirnmaterial Z60 mit mehrfachen Fäden der Stärke 200 dtex. Die Materialien des Gewirkes oder Gestrickes bestehend bevorzugt aus Polyether, Polyamid, Aramid oder geeigneten Kombinationen einzelner oder aller genannten Materialien.

Wie bereits eingangs erwähnt, sucht die Erfindung insbesondere für den Fall, dass das Scharnier schlaufenartig zwischen der Airbagklappe und dem Klappenrahmen angeordnet ist, den Übergang zwischen einer dann erfolgenden translatorischen und anschließenden rotatorischen Bewegung der Airbagklappe geeignet zu dämpfen. Insbesondere wird versucht, einen schlagartigen Spannungseintrag mit einer einzelnen Spannungsspitze zu vermeiden. In einer vorteilhaften Ausgestaltungsform der Erfindung sind daher die Dehnfähigkeit des Gewirkes oder Gestricks sowie die zur Dehnung und zum zumindest teilweisen Herausziehen der Einlege- oder Stehfäden aus dem Gewirke oder Gestrick erforderlichen Kräfte derart eingestellt, dass im Auslösefall des Airbags wenigstens zwei definierte Spannungsspitzen im Scharnier messbar sind. Diese wenigstens zwei Spannungsspitzen haben naturgemäß jeweils einen kleineren Betrag als eine einmalige Spannungsspitze bei schlagartiger Belastung des Scharniers. Hierdurch wird ein Scharnier zur Verfügung gestellt, bei dem die Gefahr katastrophalen Materialversagens mit besonders wirksamen Mitteln verringert wird. Der Fachmann entnimmt der detaillierten Beschreibung der Erfindung eine Vielzahl von Möglichkeiten, die Parameter in geeigneter Weise einzustellen und aufeinander abzustimmen.

Das erfindungsgemäße Scharnier für eine Airbagklappe wird vorzugsweise im Bereich einer Fahrzeuginnenverkleidung und insbesondere im Bereich einer Instrumententafel eines Kraftfahrzeugs angeordnet.

Abhängig vom Einbauort des Airbags, der Ruhelage der Airbagklappe in Bezug zur benachbarten Fahrzeugscheibe, der Größe der Airbagklappe sowie dem Fensterscheibenwinkel ist der Aufklappwinkel zwischen 5° und 175°.

In einer weiteren bevorzugten Ausgestaltungsform der Erfindung verhindert das Scharnier ein Umklappen der Airbagklappen um beispielsweise einen Winkel größer als 120° aus der Ruhelage und insbesondere eine Berührung der Seitenscheibe oder der Frontscheibe eines Kraftfahrzeugs durch die Airbagklappe. Hierdurch wird verhindert, dass es im Auslösefall des Airbags zu Wechselwirkungen der Airbagklappe mit dem Umgebungsbereich und gegebenenfalls zur vermeidbaren Verletzungen beispielsweise durch in die Fahrgastzelle eintretende Glas- oder Kunststoffsplitter oder dergleichen kommt.

Ein sicheres Betriebsverhalten des Scharniers wird in einer vorteilhaften Ausgestaltungsform der Erfindung dann sicher gewährleistet, wenn das Scharnier insgesamt eine Reißdehnung von wenigstens 40 % bei einer Reißfestigkeit von wenigstens 70 N/cm aufweist.

Es ist selbstverständlich, dass obwohl nur einfache Scharniere aus Gewirke oder Gestrick in Zusammenwirkung mit einfachen Airbagklappen beschrieben werden, die Erfindung auch Mehrklappensysteme und/oder die Verwendung mehrerer Scharniere für eine oder mehrere Klappen umfasst.

### Kurze Beschreibung der Zeichnungen

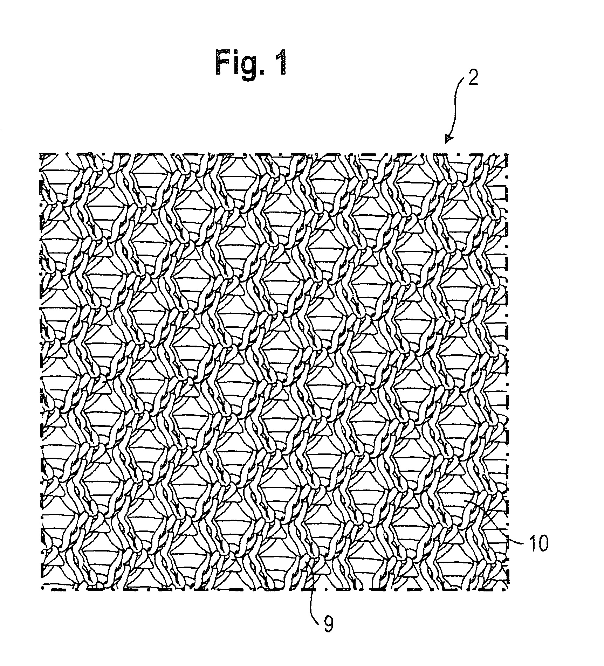

Die Erfindung wird im Anschluss unter Bezugnahme auf die Figuren 1 bis 3 näher erläutert, wobei diese zeichnerischen Darstellungen besonders bevorzugter Ausführungsformen der Erfindung lediglich zu illustratorischen Zwecken angegeben sind und keinesfalls zur Beschränkung des Schutzbereichs der Erfindung, der in den anhängenden Ansprüchen definiert ist, herangezogen werden können.
- Fig. 1: zeigt, eine Draufsicht auf eine erste Oberseite eines Gewirkes für ein erfindungsgemäßes Scharnier,
- Fig. 2: zeigt, eine Draufsicht auf eine zweite, der in Figur 1 dargestellten Oberfläche gegenüberliegende Oberfläche eines Gewirkes für ein erfindungsgemäßes Scharnier,
- Fig. 3a: zeigt eine schematische Querschnittsansicht einer mit einem Airbagmodul versehenen Instrumententafel, in der das erfindungsgemäße Scharnier verwendet wird,
- Fig. 3b: zeigt eine weitere schematische Querschnittsansicht einer mit einem Airbagmodul versehenen Instrumententafel, in der das erfindungsgemäße Scharnier verwendet wird.

### Wege zur Ausführung der Erfindung

In Figur 1 ist eine Oberseite eines Gewirkes 2 für ein erfindungsgemäßes Scharnier dargestellt. Das Gewirke 2 besteht aus zweischienig hergestellten Maschen eines Gewirkefadens aus Polyester mit jeweils etwa 160 dtex, in das eine Vielzahl parallel zueinander angeordneter Einlegefäden 10 eingesetzt ist. Die Einlegefäden 10 weisen eine Fadenstärke von 1000 dtex auf, was zu einer maximalen Kraft von etwa 900 N/5 cm und einer Dehnung von 40 % bei dieser maximalen Kraft führt.

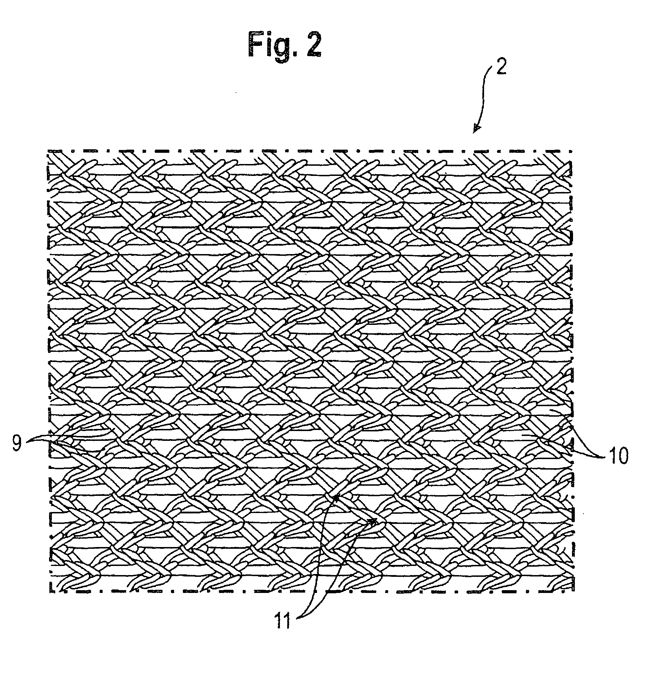

In Figur 2 ist die Rückseite des in Figur 1 gezeigten Gewirkes 2 dargestellt, wobei hier ersichtlich wird, dass die Einlegefäden 10 durch sämtliche Kreuzpunkte 11, die von den Gewirkefäden 9 gebildet sind, hindurch verlaufen. Das Gewirke 2 bildet somit eine Maschenware aus, bei der die Einlegefäden 10 die Gewirkefäden 9 an den Kreuzungspunkten 11 unter einem Winkel von etwa 45° schneiden.

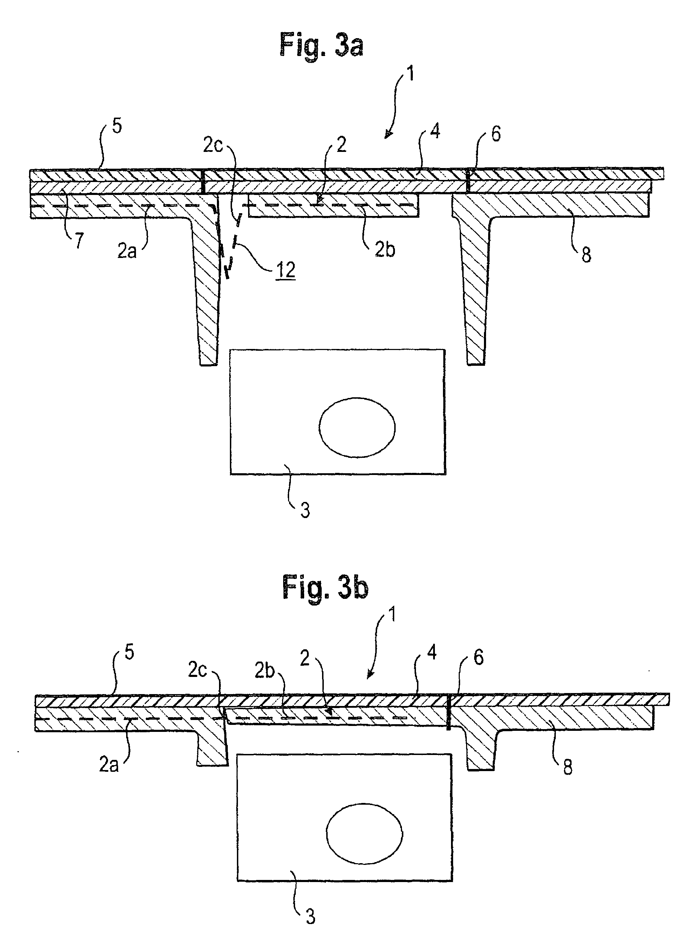

In den Figuren 3a und 3b ist eine schematische Querschnittsansicht einer Instrumententafel 1 dargestellt, unter der ein Airbagmodul 3 angeordnet ist. Die Instrumententafel 1 besteht im Wesentlichen aus einem Dekorträger 7 mit einer Schaumschicht 4 und darüber angeordneter Dekorschicht 5. In die Instrumententafel 1 ist oberhalb des Airbagmoduls 3 und seitlich zu diesem versetzt eine Schwächung 6 in den Dekorträger 7 und das Schaummaterial 4 eingebracht, wodurch im Auslösefall eines (nicht gezeigten) Airbags an der Materialschwächung 6 ein Aufreißen der Instrumententafel 1 erfolgt. Um ein vollständiges Abreißen zumindest von Teilen der Instrumententafel 1 zu verhindern, ist zwischen dem Airbagmodul und dem Dekormaterial 5 ein Scharnier in der Form eines Gewirkes 2 angeordnet. Dieses Gewirke 2 ist mit dem Kunststoff des Dekorträgers 7 zumindest an seiner dem Dekorträger 7 zugewandten Seite umspritzt und besteht im Wesentlichen aus einem Bereich 2a, der formschlüssig mit dem Airbagrahmen 8 verbunden ist, sowie einem Bereich 2b, der mit dem im Auslösefall des (nicht gezeigten) Airbags wegklappenden Bereich der Instrumententafel 1 verbunden ist. Zwischen diesen Bereichen 2a und 2b weist das Gewirke 2 zudem einen im Wesentlichen nicht mit Kunststoff umspritzten Bereich 2c aus, der in Fig. 3a in der Form einer Falte oder Schlaufe 9 ausgebildet ist. Die Airbagklappe in Fig. 3a erstreckt sich somit im Wesentlichen von der Schlaufe 9 bis zum Schwächungsbereich 6 und klappt im Auslösefall des (nicht gezeigten) Airbags insbesondere unter translatorischer und rotatorischer Bewegung des Bereichs 2c aus der dargestellten Ruhelage um. Die Airbagklappe aus Fig. 3b klappt dagegen im Wesentlichen unter einer rein rotatorischen Bewegung in die durch den Bereich 2c vorgegebene Drehachse, die senkrecht in die Darstellungsebenen hinein verläuft, um.

## Patentansprüche

1. Scharnier (2) für eine Airbagklappe, insbesondere zur Verwendung in einem Kraftfahrzeug, wobei das Scharnier das Auf- oder Umklappen einer Airbagklappe im Auslösefall eines unterhalt der Airbagklappe angeordneten Airbags (3) ohne Abreißen der Airbagklappe ermöglicht, und wobei das Scharnier im Wesentlichen aus einer Textilie gefertigt ist, wobei
das Scharnier (2) ein Gewirke oder Gestrick umfasst, welches mittels Umspritzen mit Kunststoff sowohl mit der Airbagklappe als auch mit dem an die Airbagklappe angrenzenden Bereich formschlüssig verbunden ist und **dadurch gekennzeichnet, dass** das Gewirke oder Gestrick mehrere Einlege- oder Stehfäden (10) aufweist, die unter einem Winkel von wenigstens 15° in Bezug auf die Längserstreckung der scharnierseitigen Kante der Airbagklappe angeordnet sind.

2. Scharnier (2) für eine Airbagklappe gemäß Anspruch 1,
**dadurch gekennzeichnet, dass** sämtliche Einlege- oder Stehfäden (10) im Wesentlichen parallel und vorzugsweise gleich beabstandet zueinander im Gewirke oder Gestrick angeordnet sind.

3. Scharnier (2) für eine Airbagklappe gemäß einem der voranstehenden Ansprüche, **dadurch gekennzeichnet, dass** zumindest eine Mehrzahl der Einlege- oder Stehfäden (10), vorzugsweise sämtliche Einlege- oder Stehfäden, im Wesentlichen senkrecht zur Längserstreckung der scharnierseitigen Kante der Airbagklappe angeordnet ist.

4. Scharnier (2) für eine Airbagklappe gemäß einem der voranstehenden Ansprüche, **dadurch gekennzeichnet, dass** der Widerstand der Einlege- oder Stehfäden (10) gegenüber ein zumindest teilweises Herausziehen aus dem Gewirke oder Gestrick größer als die zur Einbringung einer wesentlichen Längsdehnung in die Einlege- oder Stehfäden (10) erforderliche Kraft ist.

5. Scharnier (2) für eine Airbagklappe gemäß einem der voranstehenden Ansprüche, **dadurch gekennzeichnet, dass** die Einlege- oder Stehfäden (10) eine Beschichtung mit Trennmittel oder Haftvermittler zur Einstellung der Anhaftfähigkeit des umspritzten Kunststoff aufweist.

6. Scharnier (2) für eine Airbagklappe gemäß einem der voranstehenden Ansprüche, **dadurch gekennzeichnet, dass** der Einlege- oder Stehfaden (10) eine Feinheit von wenigstens 500 dtex, vorzugsweise von etwa 2000 dtex besitzt.

7. Scharnier (2) für eine Airbagklappe gemäß einem der voranstehenden Ansprüche, **dadurch gekennzeichnet, dass** das Gewirke oder Gestrick aus Schlaufen bestehende Maschenware mit sich unter einem Winkel von etwa 45° kreuzenden Fäden, die an den jeweiligen Kreuzpunkten einander teilweise umschlingen, aufweist.

8. Scharnier (2) für eine Airbagklappe gemäß einem der voranstehenden Ansprüche, **dadurch gekennzeichnet, dass** der das Gewirke oder Gestrick durch Umspritzen umgebende Kunststoff auf beiden Oberflächen des Gewirkes und vorzugsweise auch in den von den Fäden gebildeten Zwischenräumen des Gewirkes oder Gestricks vorliegt.

9. Scharnier (2) für eine Airbagklappe gemäß einem der voranstehenden Ansprüche, **dadurch gekennzeichnet, dass** die Zwischenräume zwischen den einzelnen Fänden der Maschenstruktur des Gewirkes oder Gestricks einen mittleren Durchmesser von mindestens 2,5mm, vorzugsweise mindestens 3,5mm aufweisen.

10. Scharnier (2) für eine Airbagklappe gemäß einem der voranstehenden Ansprüche, **dadurch gekennzeichnet, dass** die einzelnen Fäden des Gewirkes oder Gestrickts einen mittleren Durchmesser von mehr als 1,0mm, vorzugsweise etwa 1,5mm aufweisen.

11. Scharnier (2) für eine Airbagklappe gemäß einem der voranstehenden Ansprüche, **dadurch gekennzeichnet, dass** der Gewirke- oder Gestrickfaden eine Feinheit von etwa 150 dtex bis etwa 600 dtex besitzt.

12. Scharnier (2) für eine Airbagklappe gemäß einem der voranstehenden Ansprüche, **dadurch gekennzeichnet dass** die Dehnfähigkeit des Gewirkes oder Gestricks sowie die zur Dehnung und zum zumindest teilweisen Herausziehen der Einlegefäden aus dem Gewirke oder Gestrick erforderlichen Kräfte derart eingestellt sind, dass im Auslösefall des Airbags (3) wenigstens zwei definierte Spannungsspitzen im Scharnier messbar sind.

13. Scharnier (2) für eine Airbagklappe gemäß einem der voranstehenden Ansprüche, **dadurch gekennzeichnet, dass** die Airbagklappe im Bereich einer Fahrzeuginnenverkleidung, insbesondere im Bereich einer Instrumententafel (1) eines Kraftfahrzeugs, angeordnet ist.

14. Scharnier (2) für eine Airbagklappe gemäß einem der voranstehenden Ansprüche, **dadurch gekennzeichnet, dass** das Scharnier (2) ein Umklappen der Airbagklappe um einen vorgegebenen Winkel aus der Ruhelage, insbesondere eine Berührung einer Seitenscheibe oder der Frontscheibe eines Kraftfahrzeugs, verhindert.

15. Scharnier (2) für eine Airbagklappe gemäß einem der voranstehenden Ansprüche, **dadurch gekennzeichnet, dass** das Scharnier (2) eine Reißdehnung von wenigstens 40% bei einer Reißfestigkeit von wenigstens 70 N/cm aufweist.

## Claims

1. Hinge (2) for an airbag flap, in particular for use in a motor vehicle, wherein the hinge enables an airbag flap to unfold or fold down without tearing the airbag flap in the event that an airbag (3) arranged beneath the airbag flap is released, and wherein the hinge is substantially made of a textile material, wherein the hinge (2) comprises a knitted fabric which, by surrounding with injection-moulded plastic, is connected in form-locking relationship both to the airbag flap and to the region adjoining the airbag flap and **characterised in that** the knitted fabric has several inlaid or filler threads (10) which are arranged at an angle of at least 15° in relation to the longitudinal extent of the hinge edge of the airbag flap.

2. Hinge (2) for an airbag flap according to claim 1, **characterised in that** all inlaid or filler threads (10) are arranged substantially parallel to and preferably equally spaced apart from each other in the knitted fabric.

3. Hinge (2) for an airbag flap according to any of the preceding claims, **characterised in that** at least a plurality of the inlaid or filler threads (10), preferably all of the inlaid or filler threads, are arranged substantially perpendicularly to the longitudinal extent of the hinge edge of the airbag flap.

4. Hinge (2) for an airbag flap according to any of the preceding claims, **characterised in that** the resistance of the inlaid or filler threads (10) to at least partial pulling out of the knitted fabric is greater than the force required to introduce a substantial longitudinal elongation into the inlaid or filler threads (10).

5. Hinge (2) for an airbag flap according to any of the preceding claims, **characterised in that** the inlaid or filler threads (10) have a coating with release agent or adhesion promoter to adjust the capacity of the surrounding injection-moulded plastic to bond.

6. Hinge (2) for an airbag flap according to any of the preceding claims, **characterised in that** the inlaid or filler thread (10) has a fineness of at least 500 dtex, preferably approximately 2000 dtex.

7. Hinge (2) for an airbag flap according to any of the preceding claims, **characterised in that** the knitted fabric consists of loops with threads which intersect at an angle of approximately 45° and which partially wind round each other at the respective points of intersection.

8. Hinge (2) for an airbag flap according to any of the preceding claims, **characterised in that** the plastic surrounding the knitted fabric by injection moulding is present on both surfaces of the knitted fabric and preferably also in the gaps formed by the threads of the knitted fabric.

9. Hinge (2) for an airbag flap according to any of the preceding claims, **characterised in that** the gaps between the individual threads of the mesh structure of the knitted fabric have a mean diameter of at least 2.5 mm, preferably at least 3.5 mm.

10. Hinge (2) for an airbag flap according to any of the preceding claims, **characterised in that** the individual threads of the knitted fabric have a mean diameter of more than 1.0 mm, preferably approximately 1.5 mm.

11. Hinge (2) for an airbag flap according to any of the preceding claims, **characterised in that** the knitted fabric thread has a fineness of approximately 150 dtex to approximately 600 dtex.

12. Hinge (2) for an airbag flap according to any of the preceding claims, **characterised in that** the capacity of the knitted fabric for elongation as well as the forces required for elongation and for at least partial pulling of the inlaid threads out of the knitted fabric are adjusted in such a way that, in the event that the airbag (3) is released, at least two defined stressed peaks can be measured in the hinge.

13. Hinge (2) for an airbag flap according to any of the preceding claims, **characterised in that** the airbag flap is arranged in the region of an interior panel of the vehicle, in particular in the region of an instrument panel (1) of a motor vehicle.

14. Hinge (2) for an airbag flap according to any of the preceding claims, **characterised in that** the hinge (2) prevents the airbag flap from folding down about a predetermined angle out of the inoperative position, in particular contact with a side window or the windscreen of a motor vehicle.

15. Hinge (2) for an airbag flap according to any of the preceding claims, **characterised in that** the hinge (2) has an elongation at break of at least 40% with a breaking strength of at least 70 N/cm.

## Revendications

1. Charnière (2) pour un clapet de sac gonflable de sécurité, utilisable en particulier dans un véhicule automobile, la charnière permettant l'ouverture ou le rabattement d'un clapet de sac gonflable de sécurité en cas de déclenchement d'un sac gonflable de sécurité (3) disposé au-dessous du clapet de sac gonflable de sécurité, sans arrachement du clapet de sac gonflable de sécurité, et la charnière étant fabriquée essentiellement en un textile, où
la charnière (2) comprend un tissu à mailles ou un tricot, relié, par une liaison par ajustement de forme, par enrobage par injection avec de la matière synthétique, tant au clapet de sac gonflable de sécurité qu'également à la zone limitrophe au clapet de sac gonflable de sécurité, et **caractérisé en ce que** le tissu à mailles ou un tricot présente plusieurs fils d'embobinage ou de chaîne (10), disposés sous un angle d'au moins 15° par rapport à l'étendue longitudinale du bord, situé côté charnière, du clapet de sac gonflable de sécurité.

2. Charnière (2) pour un clapet de sac gonflable de sécurité selon la revendication 1, **caractérisé en ce que** l'ensemble des fils d'embobinage ou de chaîne (10) sont disposés sensiblement parallèlement et, de préférence, selon un espacement identique les uns par rapport aux autres dans le tissu à mailles ou un tricot.

3. Charnière (2) pour un clapet de sac gonflable de sécurité selon l'une des revendications précédentes, **caractérisé en ce qu'**au moins une pluralité des fils d'embobinage ou de chaîne (10), de préférence l'ensemble des fils d'embobinage ou de chaîne (10), sont disposés sensiblement perpendiculairement à l'étendue longitudinale du bord, situé côté charnière, du clapet de sac gonflable de sécurité.

4. Charnière (2) pour un clapet de sac gonflable de sécurité selon l'une des revendications précédentes, **caractérisé en ce que** la résistance des fils d'embobinage ou de chaîne (10) par rapport à une extraction au moins partielle hors du tissu à mailles ou tricot est supérieure à la force nécessaire pour l'introduction d'un allongement longitudinal notable dans les fils d'embobinage ou de chaîne (10).

5. Charnière (2) pour un clapet de sac gonflable de sécurité selon l'une des revendications précédentes, **caractérisé en ce que** les fils d'embobinage ou de chaîne (10) présentent un revêtement avec des agents séparateurs ou des agents d'adhésion pour établir une aptitude à l'adhésion de la matière synthétique d'enrobage par injection.

6. Charnière (2) pour un clapet de sac gonflable de sécurité selon l'une des revendications précédentes, **caractérisé en ce que** les fil d'embobinage ou de chaîne (10) présentent une finesse d'au moins 500 dtex, de préférence d'à peu près 2000 dtex.

7. Charnière (2) pour un clapet de sac gonflable de sécurité selon l'une des revendications précédentes, **caractérisé en ce que** le tissu à mailles ou un tricot présente un tricot composé de boucles, avec des fils se croisant sous un angle d'à peu près 45°, s'enlaçant partiellement les uns les autres aux points de croisement respectifs.

8. Charnière (2) pour un clapet de sac gonflable de sécurité selon l'une des revendications précédentes, **caractérisé en ce que** la matière synthétique, entourant par enrobage par injection le tissu à mailles ou le tricot, se présente sur les deux faces du tissu à mailles et, de préférence, également dans les espaces intermédiaires, formés par les fils, du tissu à mailles ou du tricot.

9. Charnière (2) pour un clapet de sac gonflable de sécurité selon l'une des revendications précédentes, **caractérisé en ce que** les espaces intermédiaires, entre les différents fils de la structure à mailles du tissu à mailles ou du tricot, présentent un diamètre moyen d'au moins 2,5 mm, de préférence d'au moins 3,5 mm.

10. Charnière (2) pour un clapet de sac gonflable de sécurité selon l'une des revendications précédentes, **caractérisé en ce que** les différents fils du tissu à mailles ou du tricot présentent un diamètre moyen d'au moins 1,0 mm, de préférence d'à peu près 1,5 mm.

11. Charnière (2) pour un clapet de sac gonflable de sécurité selon l'une des revendications précédentes, **caractérisé en ce que** le fil de tissu à mailles ou de tricot présente une finesse d'à peu près 150 dtex jusqu'à à peu près 600 dtex.

12. Charnière (2) pour un clapet de sac gonflable de sécurité selon l'une des revendications précédentes, **caractérisé en ce que** l'aptitude à l'allongement du tissu à mailles ou du tricot, ainsi que les efforts, nécessaires à l'allongement et à l'extraction au moins partielle des fils d'embobinage hors du tissu à mailles ou tricot, sont réglés de manière que, en cas de déclenchement du sac gonflable de sécurité (3), au moins deux pics de contrainte définis soient mesurables dans la charnière.

13. Charnière (2) pour un clapet de sac gonflable de sécurité selon l'une des revendications précédentes, **caractérisé en ce que** le clapet de sac gonflable de sécurité est disposé dans la zone d'un habillage intérieur de véhicule, en particulier dans la zone d'un tableau de bord (1) d'un véhicule automobile.

14. Charnière (2) pour un clapet de sac gonflable de sécurité selon l'une des revendications précédentes, **caractérisé en ce que** la charnière (12) empêche un rabattement du clapet de sac gonflable de sécurité de la valeur d'un angle prédéterminé à partir de la position de repos, en particulier empêche un contact physique d'une vitre latérale ou de la vitre avant d'un véhicule automobile.

15. Charnière (2) pour un clapet de sac gonflable de sécurité selon l'une des revendications précédentes, **caractérisé en ce que** la charnière (2) présente un allongement à la rupture d'au moins 40 % dans le cas d'une résistance à la rupture d'au moins 70 N/cm.
